# EUROPEAN PATENT APPLICATION

(11) **EP 4 651 369 A1**
(43) Date of publication of application: **19.11.2025**
(21) Application number: 24206899.7
(22) Date of filing: 16.10.2024
(51) Int. Cl.: H02S 20/22, H02S 20/30

(54) **PHOTOVOLTAIC BRACKET**

(30) Priority: 17.05.2024 CN 202421080504 U
(71) Applicant: Sunshare Power Technology Co., Ltd., Nanjing Jiangsu 211153 (CN)
(72) Inventor: WANG, Chao, Nanjing, 211153 (CN); CHEN, Weiwei, Nanjing, 211153 (CN); ZHANG, Yuehuo, Nanjing, 211153 (CN); SUN, Zhiqiang, Nanjing, 211153 (CN); ZHANG, Caixia, Nanjing, 211153 (CN); ZHU, Liangbing, Nanjing, 211153 (CN)
(74) Representative: Rooney, John-Paul

(57) **Abstract**

A photovoltaic bracket includes a bracket mounting portion and a bracket clamping portion. The bracket mounting portion is configured for mounting a photovoltaic module. At least part of the bracket mounting portion is configured to be arranged at a first side of a mounting body, least part of the bracket clamping portion is configured to be arranged at a second side of the mounting body, and the bracket clamping portion is configured to be fixedly connected to the bracket mounting portion to clamp the mounting body. The photovoltaic bracket is fixed by clamping the mounting body. There's no need to drill holes on the mounting body, which simplifies the mounting of the photovoltaic bracket, thereby improving the mounting efficiency of the photovoltaic bracket and satisfying the mounting demand of an individual consumer for the photovoltaic bracket. The mounting body is prevented from being damaged, thereby protecting the mounting body.

## Description

### FIELD

The present application relates to the technical field of photovoltaic power generation, and in particular to a photovoltaic bracket.

### BACKGROUND

Photovoltaic power generation is not only applicable in industry and commerce, but also in the personal consumer goods industry. In a case that the photovoltaic power generation is applied in the personal consumer goods industry, a photovoltaic bracket may be mounted on a balcony, a terrace, a roof, a space in a garden or the like.

The conventional photovoltaic bracket is complicated to mount. For example, an individual consumer is expected to drill a hole on a mounting body to mount the photovoltaic bracket, making it difficult for the individual consumer to mount the photovoltaic bracket, which restricts the application of the photovoltaic power generation to the personal consumer goods industry.

Therefore, a problem to be solved by those skilled in the art is how to design the photovoltaic bracket to simplify the mounting of the photovoltaic bracket, so as to satisfy the mounting demand of the individual consumer for the photovoltaic bracket.

### SUMMARY

In view of this, an object of the present application is to provide a photovoltaic bracket, to simplify the mounting of the photovoltaic bracket, so as to satisfy the mounting demand of an individual consumer for the photovoltaic bracket.

To achieve the above object, the following technical solutions are provided according to the present application.

A photovoltaic bracket includes a bracket mounting portion and a bracket clamping portion, where
the bracket mounting portion is configured for mounting a photovoltaic module, and at least part of the bracket mounting portion is configured to be arranged at a first side of a mounting body; and
at least part of the bracket clamping portion is configured to be arranged at a second side of the mounting body, and the bracket clamping portion is configured to be fixedly connected to the bracket mounting portion to clamp the mounting body.

In an embodiment, the bracket clamping portion includes a first securing portion, and the first securing portion is configured to be fixedly connected to the bracket mounting portion to clamp the mounting body, where the first securing portion is configured to be arranged at the second side of the mounting body, or one part of the first securing portion is located at the second side of the mounting body, and the other part of the first securing portion is located at a top face of the mounting body.

In an embodiment, the bracket clamping portion further includes a second securing portion, the second securing portion is located at the top face of the mounting body, and the first securing portion is configured to be fixedly connected to the bracket mounting portion through the second securing portion to clamp the mounting body.

In an embodiment, the second securing portion includes a first horizontal securing beam and a second horizontal securing beam, and the first securing portion, the first horizontal securing beam, the second horizontal securing beam, and the bracket mounting portion are fixedly connected in a listed sequence.

In an embodiment, a position where the first horizontal securing beam is fixedly connected to the second horizontal securing beam is adjustable along a length direction of the second securing portion to, make a length of the second securing portion adjustable; and/or
the first horizontal securing beam is in sliding fit with the second horizontal securing beam along the length direction of the second securing portion; and/or
the first horizontal securing beam is fixedly connected to the second horizontal securing beam in a detachable manner, and the second horizontal securing beam is fixedly connected to the bracket mounting portion in a detachable manner; where
the length direction of the second securing portion is a direction along which the first side and the second side of the mounting body are arranged in sequence.

In an embodiment, the position where the first horizontal securing beam is fixedly connected to the second horizontal securing beam is continuously or discontinuously adjustable along the length direction of the second securing portion.

In an embodiment, the first horizontal securing beam and the second horizontal securing beam are fixedly connected through multiple securing members, where
at least one of the multiple securing members is a first securing member, and an axial direction of the first securing member is perpendicular to a length direction of the second securing portion; and/or
at least one of the multiple securing members is a second securing member, and an axial direction of the second securing member is parallel to the length direction of the second securing portion.

In an embodiment, in a case that at least one of the multiple securing members is the first securing member, and the axial direction of the first securing member is perpendicular to the length direction of the second securing portion,
the first horizontal securing beam is provided with a first fixing hole fitted with the first securing member, and the second horizontal securing beam is provided with a second fixing hole fitted with the first securing member; and
the number of the first fixing hole is two or more, and the two or more first fixing holes are arranged in sequence along the length direction of the second securing portion; or, the number of the second fixing hole is two or more, and the two or more second fixing holes are arranged in sequence along the length direction of the second securing portion; or, both the number of the first fixing hole and the number of the second fixing hole are two or more, the two or more first fixing holes and the two or more second fixing holes are arranged in sequence along the length direction of the second securing portion respectively, to make the position where the first horizontal securing beam is fixedly connected to the second horizontal securing beam adjustable along the length direction of the second securing portion.

In a case that at least one of the multiple securing members is the second securing member, and the axial direction of the second securing member is parallel to the length direction of the second securing portion,
the second securing member includes a securing screw, and the first horizontal securing beam and the second horizontal securing beam are fixedly connected in a detachable manner through the securing screw, to make the position where the first horizontal securing beam is fixedly connected to the second horizontal securing beam adjustable along the length direction of the second securing portion; and/or,
the first horizontal securing beam is provided with a third fixing hole fitted with the second securing member, the second horizontal securing beam is provided with a mounting through hole and a fourth fixing hole that are both fitted with the second securing member, and the mounting through hole is located between the third fixing hole and the fourth fixing hole.

In an embodiment, the number of the first fixing hole is two or more, and the two or more first fixing holes are arranged in sequence along the length direction of the second securing portion; and
the number of the second fixing hole is one, the second fixing hole is an elongated hole, and a length direction of the elongated hole is along the length direction of the second securing portion.

In an embodiment, the first securing portion is configured to be fixedly connected to the bracket mounting portion through a securing member to clamp the mounting body; and/or, a distance between the first securing portion and the bracket mounting portion is adjustable; and/or, the first securing portion is fixedly connected to the bracket mounting portion in a detachable manner.

In an embodiment, the first securing portion includes a first vertical securing beam, the first vertical securing beam is configured to be arranged at the second side of the mounting body, and the first vertical securing beam is configured to be fixedly connected to the bracket mounting portion to clamp the mounting body; and/or, the first securing portion abuts against the mounting body through a securing member, or the first securing portion is fixedly connected to the mounting body through the securing member; and/or, a protective pad is provided at a side of the first securing portion close to the mounting body, and the protective pad is configured to be in contact with the mounting body.

In an embodiment, the bracket clamping portion includes a second vertical securing beam, and the first securing portion is configured to be fixedly connected to the bracket mounting portion through the second vertical securing beam to clamp the mounting body.

In an embodiment, the bracket mounting portion includes a vertical support beam and an oblique mounting beam, where the vertical support beam is fixedly connected to the bracket clamping portion; and the oblique mounting beam is configured for mounting the photovoltaic module, both ends of the oblique mounting beam are fixed to the vertical support beam, and the oblique mounting beam is inclined with respect to the vertical support beam.

In an embodiment, a bottom end of the oblique mounting beam is fixedly connected to the vertical support beam through a connecting beam, and a position of the connecting beam connected to the vertical support beam and/or the oblique mounting beam is adjustable, to make an angle between the oblique mounting beam and the vertical support beam adjustable.

In an embodiment, the vertical support beam and/or the oblique mounting beam is provided with at least two fixation positions, and any two of the at least two fixation positions are different in height; and/or
the connecting beam is fixed to the at least two fixation positions in a detachable manner.

In an embodiment, the vertical support beam and/or the oblique mounting beam being provided with the at least two fixation positions is provided with a mounting groove, and the connecting beam is located in the mounting groove; and/or
the at least two fixation positions is each provided with a fifth fixing hole, the vertical support beam is provided with a communication hole, and the communication hole is in communication with the corresponding fifth fixing holes of any two of the at least two fixation positions; and/or
at least one of the at least two fixation positions is provided with an angle mark, the angle mark is configured to indicate an inclination angle of the oblique mounting beam or a variation of the inclination angle of the oblique mounting beam when the connecting beam is fixed to the at least one of the at least two fixation positions where the angle mark is provided.

In an embodiment, both the number of the vertical support beam and the number of the oblique mounting beam are at least two, and at least two oblique mounting beams are in one-to-one correspondence to the at least two vertical support beams, where
the bracket mounting portion includes a first horizontal support beam, the first horizontal support beam is perpendicular to or inclined with respect to the at least two vertical support beams, and each of the at least two vertical support beams is fixed to the first horizontal support beam, or two adjacent vertical support beams of the at least two vertical support beams are fixedly connected through the first horizontal support beam; and/or
the bracket mounting portion includes a second horizontal support beam, the second horizontal support beam is perpendicular to or inclined with respect to the at least two oblique mounting beams, and each of the at least two oblique mounting beams is fixed to the second horizontal support beam, or two adjacent oblique mounting beams of the at least two oblique mounting beams are fixedly connected through the second horizontal support beam.

In the photovoltaic bracket according to the present application, the bracket mounting portion is configured for mounting the photovoltaic module. At least part of the bracket mounting portion is configured to be arranged at the first side of the mounting body, at least part of the bracket clamping portion is configured to be arranged at the second side of the mounting body, and the bracket clamping portion is configured to be fixedly connected to the bracket mounting portion to clamp the mounting body. In this way, the photovoltaic bracket is fixed by clamping the mounting body. Compared with the conventional technology, it is unnecessary to drill holes on the mounting body, which simplifies the mounting of the photovoltaic bracket, thereby improving the mounting efficiency of the photovoltaic bracket and satisfying the mounting demand of the individual consumer for the photovoltaic bracket. Moreover, the mounting body is prevented from being damaged, thereby protecting the mounting body.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic view showing the structure of a photovoltaic bracket according to an embodiment of the present application being mounted on a mounting body;
FIG. 2 is a front view of FIG. 1;
FIG. 3 is a perspective view of a photovoltaic bracket according to an embodiment of the present application;
FIG. 4 is a perspective view of a bracket clamping portion of the photovoltaic bracket in FIG. 3;
FIG. 5 is an exploded view of the bracket clamping portion of the photovoltaic bracket in FIG. 3;
FIG. 6 is a front view of the bracket clamping portion of the photovoltaic bracket in FIG. 3 being in a state where a gap formed by clamping is maximum;
FIG. 7 is a front view of the bracket clamping portion of the photovoltaic bracket in FIG. 3 being in another state where the gap formed by clamping is minimum ;
FIG. 8 is a perspective view of a bracket mounting portion of the photovoltaic bracket in FIG. 3;
FIG. 9 is a front view of the bracket mounting portion of the photovoltaic bracket in FIG. 3 being in a state where an included angle between an oblique mounting beam and a vertical support beam is maximum;
FIG. 10 is an schematic enlarged view of portion A in FIG. 9;
FIG. 11 is a front view of the bracket mounting portion of the photovoltaic bracket according to the embodiment of the present application being in another state where the included angle between the oblique mounting beam and the vertical support beam is intermediate;
FIG. 12 is yet another front view of the bracket mounting portion of the photovoltaic bracket according to the embodiment of the present application being in yet another state where the included angle between the oblique mounting beam and the vertical support beam is minimum; and
FIG. 13 is a perspective view of another photovoltaic bracket according to another embodiment of the present application.

**Reference numerals:**

| | | | |
|---|---|---|---|
| 100 | photovoltaic bracket, | 200 | photovoltaic module, |
| 300 | balcony, | 310 | mounting body, |
| 1 | bracket mounting portion, | 11 | vertical support beam, |
| 111 | fifth fixing hole, | 112 | communication hole, |
| 113 | angle mark, | 12 | oblique mounting beam, |
| 13 | connecting beam, | 14 | first horizontal support beam, |
| 15 | second horizontal support beam, | 16 | pressing block, |
| 17 | limiting member, | 2 | bracket clamping portion, |
| 21 | first securing portion, | 211 | first vertical securing beam, |
| 22 | second securing portion, | 221 | first horizontal securing beam, |
| 2211 | first fixing hole, | 2212 | third fixing hole, |
| 222 | second horizontal securing beam, | 2221 | second fixing hole, |
| 2222 | fourth fixing hole, | 2223 | mounting through hole, |
| 2224 | insertion groove, | 23 | second vertical securing beam, |
| 24 | first securing member, | 25 | second securing member, |
| 251 | securing screw, | 252 | securing handle, |
| 26 | fourth securing member, | 27 | protective pad. |

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments of the present application, rather than all of the embodiments. All the other embodiments obtained by those skilled in the art based on the embodiments in the present application without any creative work belong to the scope of protection of the present application.

Technical solutions according to the embodiments of the present application will be described clearly and completely as follows in conjunction with the accompany drawings in the embodiments of the present application. The terms used in the following embodiments are only for the purpose of describing specific embodiments, and are not intended to limit the present application. As used in the specification and claims of the present application, the singular expressions "a", "one", "said", "the above", "the" and "this" are intended to include expressions such as "one or more", unless otherwise indicated clearly in the context. It should be understood that, in the embodiments of the present application, the term "one or more" refers to one, two, or more than two; the term "and/or" are used to describe correlation relationships between correlated objects, and indicates there may be three relationships, for example, "A and/or B" indicates three cases, namely only A exists, both A and B exist, and only B exists. The character "/" generally indicates "or" relationship between the correlated objects before and after it.

References to "one embodiment" or "some embodiments" etc. described in this specification indicate one or more embodiments of the present application include a particular feature, structure or characteristic described in conjunction with the embodiment. Therefore, the phrases "in one embodiment", "in some embodiments", "in other embodiments", "in yet other embodiments", etc. appearing in different places in this specification do not necessarily refer to the same embodiment, instead, they mean "one or more but not all embodiments", unless otherwise specifically emphasized in other ways. The terms "include", "comprise", "have" and variations thereof all indicate "include but not limited to", unless otherwise specifically emphasized in other ways.

The term "multiple" in the embodiments of the present application refers to two or more. It should be noted that, in the description of the embodiments of the present application, the terms such as "first", "second" and the like are merely for distinguishing the description, and should not be construed as indicating or implying relative importance or order.

The terms "parallel" and "perpendicular" in this application mean "substantially parallel" and "substantially perpendicular" in actual operation, where "substantially parallel" can be understood as parallel with a certain degree of error, and similarly, "substantially perpendicular" can be understood as perpendicular with a certain degree of error.

A photovoltaic bracket is provided according to the embodiments of the present application, and is configured to be mounted on a mounting body. The photovoltaic bracket is more miniaturized, an inclination angle of a photovoltaic module is adjustable, and the photovoltaic bracket is adaptable to different scenarios, which improves mounting convenience and simplicity, and lightweight of the photovoltaic bracket, and thereby satisfying the mounting demand of an individual consumer for the photovoltaic bracket.

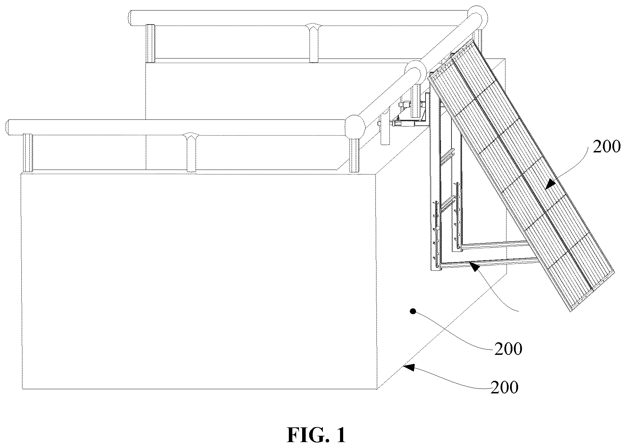

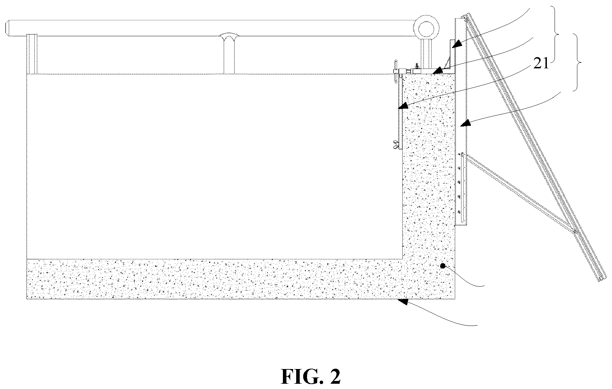

As shown in FIG. 1 and FIG. 2, a photovoltaic bracket 100 is provided according to an embodiment of the present application, including a bracket mounting portion 1 and a bracket clamping portion 2. The bracket mounting portion 1 is configured for mounting a photovoltaic module 200, and at least part of the bracket mounting portion 1 is configured to be arranged at a first side of a mounting body 310; at least part of the bracket clamping portion 2 is configured to be arranged at a second side of the mounting body 310, and the bracket clamping portion 2 is configured to be fixedly connected to the bracket mounting portion 1 to clamp the mounting body 310.

It should be noted that, the entire photovoltaic bracket 100 is arranged at a top end of the mounting body 310, and the entire photovoltaic bracket 100 clamps the mounting body 310, such that the photovoltaic bracket 100 is fixed on the mounting body 310, to provide support to the photovoltaic module 200.

The first side of the mounting body 310 is opposite to the second side of the mounting body 310. In some embodiments, the first side and the second side of the mounting body 310 are provided in sequence along a thickness direction of the mounting body 310.

The mounting body 310 may be a wall, a guardrail, a structural beam or the like, which is not limited in the embodiment of the present application.

For example, in a case that the mounting body 310 is a wall, the wall may be a wall of a balcony 300, or may be a wall of a courtyard, or other walls. The wall may be a concrete wall, a masonry-concrete wall or the like. In a case that the mounting body 310 is a guardrail, the guardrail may be a guardrail of a balcony or other structures. The guardrail may be a steel guardrail, a cement guardrail or the like. In a case that the mounting body 310 is a structural beam, the structural beam may be a structural beam of a steel tower or the like.

In a case that the mounting body 310 is a mounting body of the balcony 300, the first side of the mounting body 310 is an outer side of the balcony 300, and the second side of the mounting body 310 is an inner side of the balcony 300.

In the photovoltaic bracket 100 according to the embodiment of the present application, the bracket mounting portion 1 is configured for mounting the photovoltaic module 200, and at least a part of the bracket mounting portion 1 is configured to be arranged at the first side of the mounting body 310; at least part of the bracket clamping portion 2 is configured to be arranged at the second side of the mounting body 310, and the bracket clamping portion 2 is configured to be fixedly connected to the bracket mounting portion 1 to clamp the mounting body 310. In this way, the photovoltaic bracket 100 is fixed by clamping the mounting body 310, which avoids drillings holes on the mounting body 310 compared with the conventional technology, thereby simplifying the mounting of the photovoltaic bracket 100, and improving the mounting efficiency of the photovoltaic bracket 100. The photovoltaic bracket 100 can be quickly and stably mounted, which satisfies the mounting demands of individual consumers for the photovoltaic bracket 100. Moreover, the mounting body 310 is prevented from being damaged, thereby protecting the mounting body 310.

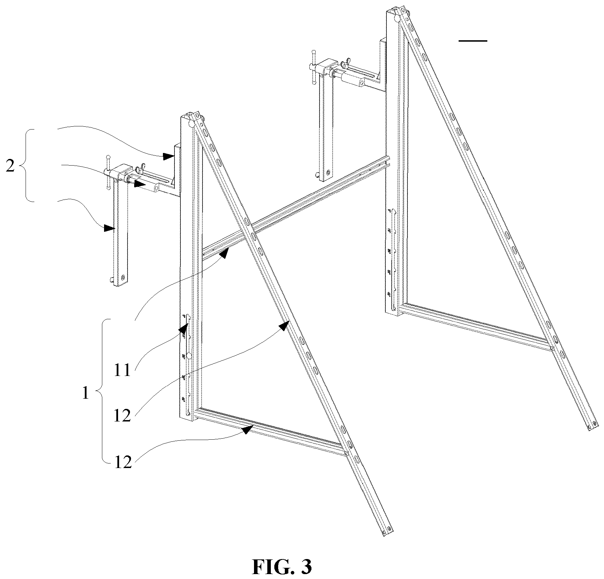

As shown in FIG. 2 and FIG. 3, in some embodiments, the bracket clamping portion 2 includes a first securing portion 21 and a second securing portion 22 that are fixedly connected to each other.

The first securing portion 21 is configured to be arranged at the second side of the mounting body 310. Or, one part of the first securing portion 21 is located at the second side of the mounting body 310, and the other part of the first securing portion 21 is located at a top face of the mounting body 310.

The second securing portion 22 is located at the top face of the mounting body 310, and the first securing portion 21 is configured to be fixedly connected to the bracket mounting portion 1 through the second securing portion 22, so as to clamp the mounting body 310. During the mounting process, the second securing portion 22 and the bracket mounting portion 1 are assembled first, and then the second securing portion 22 is placed on the top face of the mounting body 310. In this way, the mounting body 310 can bear part of a weight of the photovoltaic bracket, which facilitates the fixed connection between the first securing portion 21 and the second securing portion 22, and thereby reducing the mounting difficulty for the individual customer. Moreover, the first securing portion 21 and the second securing portion 22 can be replaced with other ones having different sizes, which is adaptable to mounting bodies 310 of various widths, and thereby improving the adaptability of the photovoltaic bracket 100 to the mounting body 310. Furthermore, there's no need to replace the bracket mounting portion 1 which reduces the cost for the replacement.

To facilitate maintenance and replacement of the first securing portion 21 and the second securing portion 22, the first securing portion 21 may be fixedly connected to the second securing portion 22 in a detachable manner, and the second securing portion 22 may be fixedly connected to the bracket mounting portion 1 in a detachable manner. Moreover, the first securing portion 21, the second securing portion 22, and the bracket mounting portion 1 can be detached into individual components that can be separately transported, which simplifies the transportation of the photovoltaic bracket.

The specific structure of the detachable fixed connections may be determined according to practice, which is not limited in the embodiment of the present application.

Alternatively, the first securing portion 21 may be fixedly connected to the second securing portion 22 in an undetachable manner, and the second securing portion 22 may be fixedly connected to the bracket mounting portion 1 in an undetachable manner.

To improve the adaptability of the photovoltaic bracket 100 to the mounting body 310, a length of the second securing portion 22 is along a thickness direction of the mounting body 310, and the length of the second securing portion 22 is adjustable. Exemplarily, the length of the second securing portion 22 is continuously adjustable, or the length of the second securing portion 22 is discontinuously adjustable.

The specific structure for making the length of the second securing portion 22 adjustable may be designed according to practice, which is not limited in the embodiment of the present application.

As shown in FIG. 3 to FIG. 5, in some embodiments, the second securing portion 22 includes a first horizontal securing beam 221 and a second horizontal securing beam 222, and the first securing portion 21, the first horizontal securing beam 221, the second horizontal securing beam 222, and the bracket mounting portion 1 are fixedly connected in a listed sequence. The first horizontal securing beam 221 and the second horizontal securing beam 222 are both configured to be arranged at the top face of the mounting body 310. A length direction of the first horizontal securing beam 221 and a length direction of the second horizontal securing beam 222 are the same as a length direction of the second securing portion 22.

The second horizontal securing beam 222 is configured to be fixedly connected to the bracket mounting portion 1, and the second horizontal securing beam 222 is configured to be arranged at the top face of the mounting body 310. In this case, the entire bracket mounting portion 1 may be configured to be arranged at the first side of the mounting body 310.

To facilitate mounting, maintenance and transportation, the first securing portion 21 is fixedly connected to the first horizontal securing beam 221 in a detachable manner, the first horizontal securing beam 221 is fixedly connected to the second horizontal securing beam 222 in a detachable manner, and the second horizontal securing beam 222 is fixedly connected to the bracket mounting portion 1 in a detachable manner. The specific structure of the detachable fixed connections may be determined according to practice.

In practice, alternatively, the first securing portion 21 may be fixedly connected to the first horizontal securing beam 221 in an undetachable manner, the first horizontal securing beam 221 may be fixedly connected to the second horizontal securing beam 222 in an undetachable manner, and the second horizontal securing beam 222 may be fixedly connected to the bracket mounting portion 1 in an undetachable manner.

In the above embodiment, the first securing portion 21 and the first horizontal securing beam 221 are separate structures. To simplify the mounting, the first securing portion 21 and the first horizontal securing beam 221 may be of an integral structure, which reduces components, and there's no need to mount the first securing portion 21 to the first horizontal securing beam 221, thereby simplifying the mounting of the entire photovoltaic bracket.

To make the length of the second securing portion 22 adjustable, a position where the first horizontal securing beam 221 is fixedly connected to the second horizontal securing beam 222 is adjustable along the length direction of the second securing portion 22. Exemplarily, the position where the first horizontal securing beam 221 is fixedly connected to the second horizontal securing beam 222 is continuously or discontinuously adjustable along the length direction of the second securing portion 22.

The specific structure of the fixed connections between the first horizontal securing beam 221 and the second horizontal securing beam 222 may be determined according to practice.

In some embodiments, the first horizontal securing beam 221 is fixedly connected to the second horizontal securing beam 222 through a securing member. One or at least two securing members may be provided. In a case that the first horizontal securing beam 221 is fixedly connected to the second horizontal securing beam 222 in a detachable manner, the first horizontal securing beam 221 is fixedly connected to the second horizontal securing beam 222 in a detachable manner through the securing member.

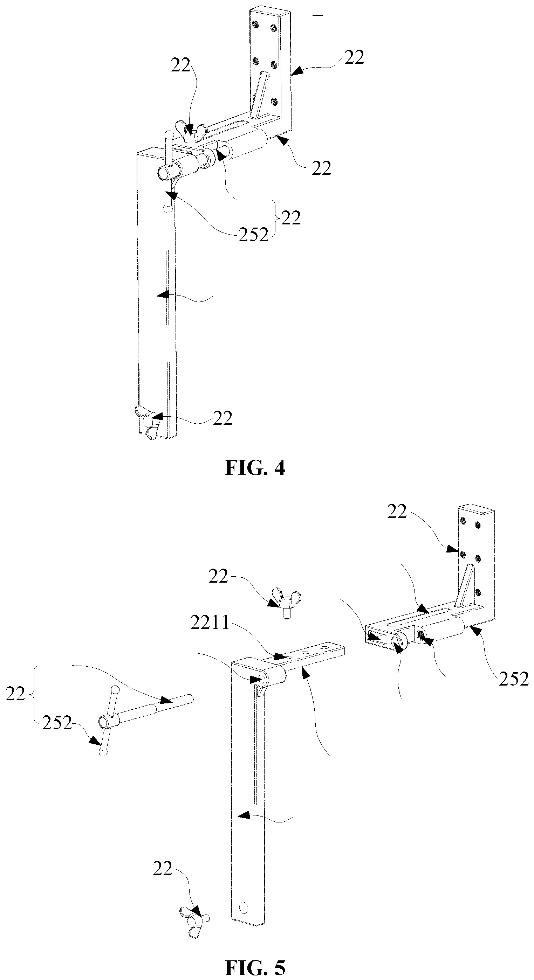

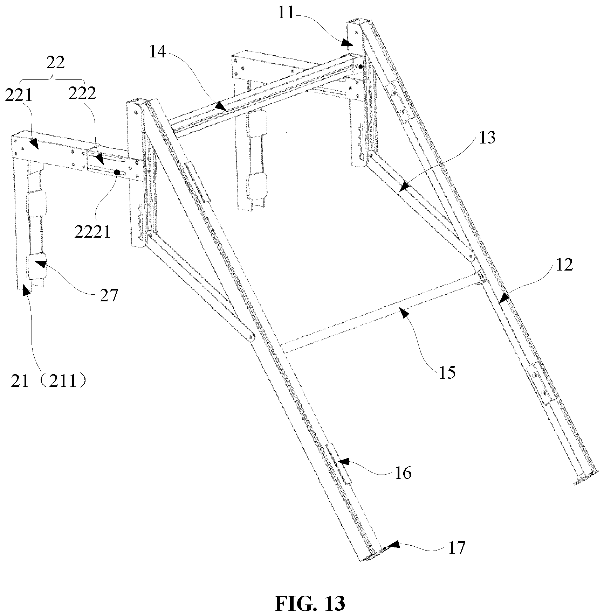

In one aspect, at least one of the securing member is a first securing member 24, and an axial direction of the first securing member 24 is perpendicular to the length direction of the second securing portion 22. Exemplarily, as shown in FIG. 4, the axial direction of the first securing member 24 is along a vertical direction. As shown in FIG. 13, the axial direction of the first securing member 24 is perpendicular to the vertical direction.

It should be noted that, the first securing member 24 is not shown in FIG. 13. However, it can be inferred from the structure shown in FIG. 13 that the axial direction of the first securing member 24 is perpendicular to the vertical direction.

In the other aspect, at least one of the securing member is a second securing member 25, and an axial direction of the second securing member 25 is parallel to the length direction of the second securing portion 22.

The above two aspects may be combined to improve the stability of the entire photovoltaic bracket. In a case that the above two aspects are combined, at least two securing members are provided to fixedly connect the first horizontal securing beam 221 and the second horizontal securing beam 222, and the axial direction of the first securing member 24 is perpendicular to the axial direction of the second securing member 25.

In a case that the first horizontal securing beam 221 is fixedly connected to the second horizontal securing beam 222 through the first securing member 24, the first horizontal securing beam 221 is provided with a first fixing hole 2211 fitted with the first securing member 24, and the second horizontal securing beam 222 is provided with a second fixing hole 2221 fitted with the first securing member 24.

To make the length of the second securing portion 22 adjustable, the number of at least one of the first fixing hole 2211 and the second fixing hole 2221 is at least two, and the at least two first fixing holes 2211 or the at least two second fixing holes 2221 are arranged in sequence along the length direction of the second securing portion 22, to make the position where the first horizontal securing beam 221 is fixedly connected to the second horizontal securing beam 222 adjustable along the length direction of the second securing portion 22, thereby making the length of the second securing portion 22 adjustable.

Exemplarily, at least two first fixing holes 2211 are provided, and are arranged in sequence along the length direction of the second securing portion 22. One second fixing hole 2221 is provided, the second fixing hole 2221 is an elongated hole, and a length direction of the elongated hole is along the length direction of the second securing portion 22. In this way, the length of the second securing portion 22 is continuously adjustable.

Exemplarily, at least two first fixing holes 2211 are provided, and are arranged in sequence along the length direction of the second securing portion 22. At least two second fixing holes 2221 are provided, and are arranged in sequence along the length direction of the second securing portion 22. In this way, the length of the second securing portion 22 is discontinuously adjustable.

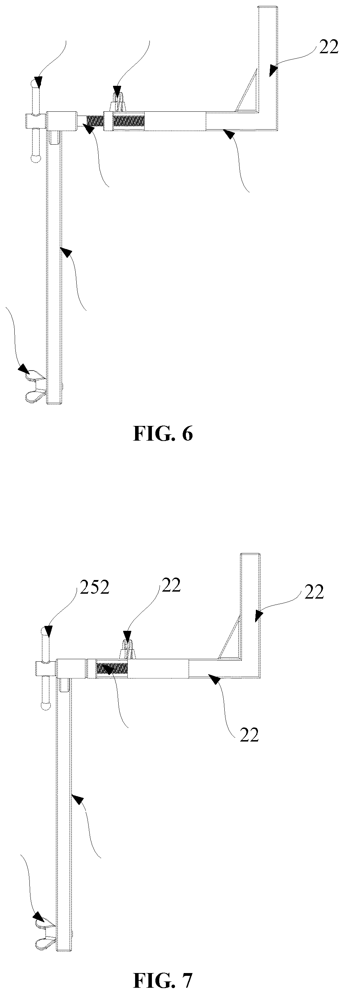

As shown in FIG. 6 and FIG. 7, the first securing member 24 can be adjusted to be mounted to different first fixing holes 2211, such that the position where the first horizontal securing beam 221 is fixedly connected to the second horizontal securing beam 222 is adjustable along the length direction of the second securing portion 22, and thus the length of the second securing portion 22 can be adjusted to be adapted to mounting bodies 310 of various thicknesses.

It should be noted that, the structure shown in FIG. 7 is suitable for a mounting body 310 with a relatively small thickness, while the structure shown in FIG. 6 is suitable for a mounting body 310 with a relatively large thickness.

To further improve the adjustability, the first horizontal securing beam 221 may be fixedly connected to the second horizontal securing beam 222 through the first securing member 24 in a detachable manner. In this way, even if the first horizontal securing beam 221 and the second horizontal securing beam 222 are fixedly connected to each other, they can still be detached from each other, the position where the first horizontal securing beam 221 and the second horizontal securing beam 222 are fixedly connected to each other can be adjusted again according to a thickness of the mounting body 310, i.e. the length of the second securing portion 22 can be adjusted again.

The first securing member 24 may be a threaded fastener or the like. To simplify mounting, the first securing member 24 may be a manual securing member. In this way, a human hand can directly act on the first securing member 24 to operate the first securing member 24 without the need of additional tools, which improves the convenience. Exemplarily, the first securing member 24 is a butterfly screw, which can enhance the securing performance of the first securing member. Of course, the first securing member 24 may be other components, which is not limited in the present embodiment.

In a case that the first horizontal securing beam 221 and the second horizontal securing beam 222 are fixedly connected through the second securing member 25, the first horizontal securing beam 221 is provided with a third fixing hole 2212 fitted with the second securing member 25, and the second horizontal securing beam 222 is provided with a fourth fixing hole 2222 fitted with the second securing member 25.

A gap is present between the third fixing hole 2212 and the fourth fixing hole 2222. In a case that the gap is relatively large, the second securing member 25 is also relatively long, a mounting through hole 2223 configured to be fitted with the second securing member 25 may be provided in the second horizontal securing beam 222, to facilitate the mounting of the second securing member 25, where the mounting through hole 2223 is located between the third fixing hole 2212 and the fourth fixing hole 2222. In this way, the mounting through hole 2223 performs guiding and positioning, which facilitates the mounting of the second securing member 25.

To facilitate the mounting of the second securing member 25, the second securing member 25 is inserted into the fourth fixing hole 2222 through the third fixing hole 2212.

To make the length of the second securing portion 22 adjustable, the second securing member 25 includes a securing screw 251, so that the position where the first horizontal securing beam 221 is fixedly connected to the second horizontal securing beam 222 is adjustable along the length direction of the second securing portion 22. It should be noted that, the first horizontal securing beam 221 and the second horizontal securing beam 222 are fixedly connected to each other through the securing screw 251 in a detachable manner. One of the third fixing hole 2212 and the fourth fixing hole 2222 is a through hole, and the other one of third fixing hole 2212 and the fourth fixing hole 2222 is a threaded hole. In a case that the second securing member 25 is inserted into the fourth fixing hole 2222 through the third fixing hole 2212, the third fixing hole 2212 is the through hole, and the fourth fixing hole 2222 is the threaded hole.

As shown in FIG. 6 and FIG. 7, by adjusting the position of the second securing member 25 in the third fixing hole 2212 (that is, the position of the second securing member 25 with respect to the third fixing hole 2212 in the length direction), the position where the first horizontal securing beam 221 is fixedly connected to the second horizontal securing beam 222 can be adjusted along the length direction of the second securing portion 22, and thus the length of the second securing portion 22 can be adjusted, to be adapted mounting bodies 310 of various thicknesses.

It should be noted that, the structure shown in FIG. 7 is suitable for a mounting body 310 with a relatively small thickness, while the structure shown in FIG. 6 is suitable for a mounting body 310 of with relatively large thickness.

To simplify mounting, the second securing member 25 may be a manual securing member. In this way, the human hand can directly act on the second securing member 25 to operate the second securing member 25 without the need of additional tools, which improves the convenience.

Exemplarily, the second securing member 25 includes a securing screw 251 and a securing handle 252, and the securing handle 252 is fixed at an end portion of the securing screw 251. The specific shape of the securing handle 252 may be determined according to actual situation. Of course, the second securing member 25 may be of other structures, which is not limited in the present embodiment.

During adjustment to the position where the first horizontal securing beam 221 is fixedly connected to the second horizontal securing beam 222, the first horizontal securing beam 221 and/or the second horizontal securing beam 222 are expected to be moved. To make it easier to move the first horizontal securing beam 221 and/or the second horizontal securing beam 222, the first horizontal securing beam 221 is in sliding fit with the second horizontal securing beam 222 in the length direction of the second securing portion 22. In this way, the second horizontal securing beam 222 and the first horizontal securing beam 221 can guide and limit each other, making it easier to move the first horizontal securing beam 221 and/or the second horizontal securing beam 222 along the length direction of the second securing portion 22.

To simplify the structure, one of the first horizontal securing beam 221 and the second horizontal securing beam 222 is provided with an insertion groove 2224 fitted with the other one of the first horizontal securing beam 221 and the second horizontal securing beam 222 by insertion. Exemplarily, the second horizontal securing beam 222 is provided with the insertion groove 2224 fitted with the first horizontal securing beam 221 by insertion. In this case, the third fixing hole 2212 is provided at a lateral portion of the first horizontal securing beam 221, and the fourth fixing hole 2222 and the mounting through hole 2223 are both provided at a lateral portion of the second horizontal securing beam 222, so as to prevent interference with the insertion fitting between the first horizontal securing beam 221 and the second horizontal securing beam 222.

Of course, the first horizontal securing beam 221 may be in sliding fit with the second horizontal securing beam 222 through other structures, such as a slide rail structure, which is not limited to the above embodiment.

In other embodiments, the bracket clamping portion 2 includes the first securing portion 21 but does not include the second securing portion 22. In this case, the first securing portion 21 is directly connected to the bracket mounting portion 1 in a fixed manner to clamp the mounting body 310.

In the case that the first securing portion 21 is configured to be fixedly connected to the bracket mounting portion 1 to clamp the mounting body 310, the first securing portion 21 may be fixedly connected to the bracket mounting portion 1 through another securing member to clamp the mounting body 310. To distinguish the another securing member from the securing member described hereinabove, the another securing member for fixedly connecting the bracket mounting portion 1 and the first securing portion 21 is referred to as a third securing member.

To facilitate mounting and maintenance, the first securing portion 21 is fixedly connected to the bracket mounting portion 1 in a detachable manner. Exemplarily, the first securing portion 21 is fixedly connected to the bracket mounting portion 1 in a detachable manner through the third securing member.

Since a distance between the first securing portion 21 and the bracket mounting portion 1 is relatively large, the third securing member includes a screw to facilitate mounting. To simplify mounting, the third securing member may be a manual securing member. In this way, the human hand can directly act on the third securing member without the need of additional tools, which improves the convenience. Exemplarily, the third securing member includes a screw and an operating handle, and the operating handle is fixed at an end portion of the screw. It should be noted that, reference of the structure of the third securing member is made to the structure of the second securing member 25.

In the case that the first securing portion 21 is configured to be fixedly connected to the bracket mounting portion 1 to clamp the mounting body 310, the distance between the first securing portion 21 and the bracket mounting portion 1 is adjustable to improve the adaptability of the photovoltaic bracket 100 to the mounting body 310. It should be noted that, the distance between the first securing portion 21 and the bracket mounting portion 1 is adjustable along the thickness direction of the mounting body 310. To facilitate the adjustment, the third securing member includes a screw.

In the embodiment of the present application, the specific structure of the first securing portion 21 may be determined according to practice. In some embodiments, to simplify the structure, the first securing portion 21 includes a first vertical securing beam 211. The first vertical securing beam 211 is configured to be arranged at the second side of the mounting body 310, and the first vertical securing beam 211 is configured to be fixedly connected to the bracket mounting portion 1 to clamp the mounting body 310.

It should be noted that, the first vertical securing beam 211 is arranged along the vertical direction, i.e. a length direction of the first vertical securing beam 211 is the same as the vertical direction. In a case that the bracket clamping portion 2 includes the first securing portion 21 and the second securing portion 22, the first vertical securing beam 211 is fixedly connected to the second securing portion 22. In a case that the second securing portion 22 includes the first horizontal securing beam 221 and the second horizontal securing beam 222, the first vertical securing beam 211 is fixedly connected to the first horizontal securing beam 221.

In the present embodiment of the present application, the first securing portion 21 droops naturally. To improve the reliability of clamping the mounting body 310 and the stability of the photovoltaic bracket, the first securing portion 21 abuts against or is fixedly connected to the mounting body 310 through yet another securing member. To distinguish the yet another securing member from the securing members described hereinabove, the yet another securing member is referred to as a fourth securing member 26.

In practice, a top end of the first securing portion 21 is fixedly connected to the bracket mounting portion 1, and a bottom end of the first securing portion 21 is configured to abut against or be fixedly connected to the mounting body 310 through the fourth securing member 26. Alternatively, the fourth securing member 26 may be located a middle portion or other positions of the first securing portion 21.

It should be noted that, the fourth securing member 26 is fixedly connected to the first securing portion 21. The fourth securing member 26 is configured to abut against the mounting body 310, or the fourth securing member 26 is configured to be fixedly connected to the mounting body 310.

One or at least two fourth securing members 26 may be provided, which is determined according to practice. Exemplarily, at least two fourth securing members 26 are provided, and the at least two fourth securing members 26 are distributed on the first securing portion 21 along the vertical direction.

To facilitate mounting, the fourth securing member 26 may be a threaded fastener. To simplify mounting, the fourth securing member 26 may be a manual securing member. In this way, the human hand can directly act on the fourth securing member 26 without the need of additional tools, which improves the convenience.

Exemplarily, the fourth securing member 26 may be a butterfly screw or a hexagon socket head cap screw, which can enhance the securing performance. Alternatively, the fourth securing member 26 may be other components, which is not limited in the present embodiment.

In the embodiment of the present application, the photovoltaic bracket clamps the mounting body 310. To prevent the mounting body 310 and the first securing portion 21 from being damaged by a clamping force, as shown in FIG. 13, a protective pad 27 is provided at a side of the first securing portion 21 close to the mounting body 310, and the protective pad 27 is configured to be in contact with the mounting body 310. The protective pad 27 is elastic. In this way, the protective pad 27 can protect the mounting body 310, and prevent the mounting body 310 and the first securing portion 21 from being damaged by the clamping force. In an embodiment, the number of the protective pads 27 is plural, the multiple protective pads 27 may have the same thickness or different thicknesses, and the multiple protective pads 27 are arranged in a stacked manner. The multiple protective pads 27 can not only protect the mounting body 310 but also be better adapted to the gap between the photovoltaic bracket and the mounting body 310.

The size and shape of the protective pad 27 may be determined according to practice. In an embodiment, two or more protective pads 27 are provided, and the two or more protective pads 27 are arranged in sequence along the vertical direction.

In the embodiment of the present application, to fix the bracket mounting portion 1, the bracket clamping portion 2 further includes a second vertical securing beam 23, and the first securing portion 21 is configured to be fixedly connected to the bracket mounting portion 1 through the second vertical securing beam 23 to clamp the mounting body 310.

It should be noted that, the second vertical securing beam 23 is arranged along the vertical direction, i.e. a length direction of the second vertical securing beam 23 is along the vertical direction.

In a case that the bracket clamping portion 2 does not include the second securing portion 22, the first securing portion 21 is directly connected to the second vertical securing beam 23 in a fixed manner, and the second vertical securing beam 23 is configured to be fixedly connected to the bracket mounting portion 1.

In a case that the bracket clamping portion 2 includes the second securing portion 22, the first securing portion 21, the second securing portion 22, and the second vertical securing beam 23 are fixedly connected in a listed sequence, that is, the first securing portion 21 is indirectly connected to the second vertical securing beam 23 in a fixed manner through the second securing portion 22. In a case that the second securing portion 22 includes the first horizontal securing beam 221 and the second horizontal securing beam 222, the second vertical securing beam 23 and the second horizontal securing beam 222 may be separate structures or an integral structure. To simplify the mounting of the photovoltaic bracket 100, the second vertical securing beam 23 and the second horizontal securing beam 222 are of an integral structure.

To facilitate the mounting of the second vertical securing beam 23 and the bracket mounting portion 1, the second vertical securing beam 23 is fitted to and fixedly connected to a vertical support beam 11 of the bracket mounting portion 1.

To facilitate replacement and maintenance of the bracket mounting portion 1, the second vertical securing beam 23 is fixedly connected to the bracket mounting portion 1 in a detachable manner. To facilitate replacement and maintenance of the second securing portion 22, the second vertical securing beam 23 is fixedly connected to the second securing portion 22 in a detachable manner, and the second securing portion 22 is fixedly connected to the first securing portion 21 in a detachable manner.

In practice, the bracket clamping portion 2 may not include the second vertical securing beam 23. As shown in FIG. 13, in a case that the bracket clamping portion 2 includes the first securing portion 21 and the second securing portion 22, the second securing portion 22 is directly connected to the vertical support beam 11 of the bracket mounting portion 1 in a fixed manner. In a case that the bracket clamping portion includes the first securing portion 21 but does not include the second securing portion 22, the first securing portion 21 is directly connected to the vertical support beam 11 of the bracket mounting portion 1 in a fixed manner.

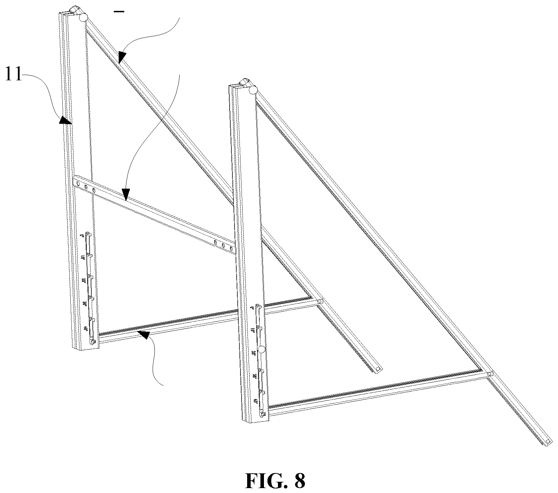

As shown in FIG. 1 to FIG. 3, and FIG. 8, in the embodiment of the present application, the bracket mounting portion 1 includes a vertical support beam 11 and an oblique mounting beam 12. The vertical support beam 11 is fixedly connected to the bracket clamping portion 2. The oblique mounting beam 12 is configured for mounting the photovoltaic module 200, and both ends of the oblique mounting beam 12 are fixed to the vertical support beam 11. The oblique mounting beam 12 is inclined with respect to the vertical support beam 11.

To facilitate the mounting of the photovoltaic module 200, the oblique mounting beam 12 is provided with a mounting hole. The photovoltaic module 200 is mounted on the oblique mounting beam 12 through a fastener fitted to the mounting hole. Alternatively, the photovoltaic module 200 may be mounted on the oblique mounting beam 12 by other means, which is not limited in the embodiment of the present application.

To ensure that the oblique mounting beam 12 is inclined with respect to the vertical support beam 11, a bottom end of the oblique mounting beam 12 is fixedly connected to the vertical support beam 11 through a connecting beam 13.

A top end of the oblique mounting beam 12 may be directly connected to the vertical support beam 11 in a fixed manner. The top end of the oblique mounting beam 12 may also be fixedly connected to the vertical support beam 11 through another connecting beam 13. In this case, the another connecting beam 13 connected at the top end of the oblique mounting beam 12 is shorter than the connecting beam 13 connected at the bottom end of the oblique mounting beam 12.

It should be noted that, the bottom end of the oblique mounting beam 12 refers to a segment at a bottom portion of the oblique mounting beam, and is not intended to only include an end of the bottom portion of the oblique mounting beam 12.

To facilitate mounting, dismounting and maintenance, one end of the connecting beam 13 may be fixedly connected to the vertical support beam 11 in a detachable manner, and the other end of the connecting beam 13 may be fixedly connected to the oblique mounting beam 12 in a detachable manner.

An inclination angle of the oblique mounting beam 12 is kept the same as an inclination angle of the photovoltaic module 200. In different regions or under different sunshine conditions, the photovoltaic module 200 may have different inclination angles. To make it easier to adjust the inclination angle of the photovoltaic module 200, the inclination angle of the oblique mounting beam 12 is adjustable, i.e. an included angle between the oblique mounting beam 12 and the vertical support beam 11 is adjustable.

In some embodiments, a position of the connecting beam 13 connected to the vertical support beam 11 is adjustable, to make the angle between the oblique mounting beam 12 and the vertical support beam 11 adjustable. It should be noted that, the position of the connecting beam 13 connected to the vertical support beam 11 is adjustable means that the position of the connecting beam 13 connected to the vertical support beam 11 is adjustable along the vertical direction (a length direction of the vertical support beam 11).

The vertical support beam 11 is provided with at least two fixation positions, and the connecting beam 13 is fixed to any one of the at least two fixation positions in a detachable manner. Any two of the at least two fixation positions are different in height.

The connecting beam 13 may be fixed to the fixation position in a detachable manner through a threaded fastener or a snap-fit structure. To simplify the structure, the connecting beam 13 is fixed to the fixation position in a detachable manner through a threaded fastener.

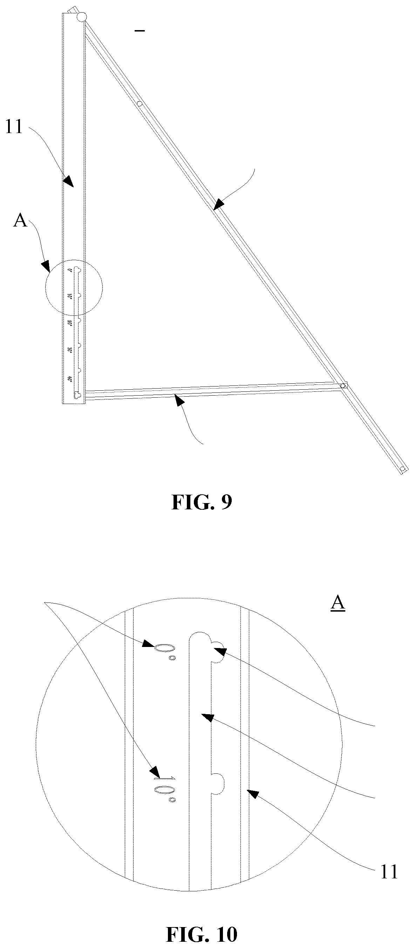

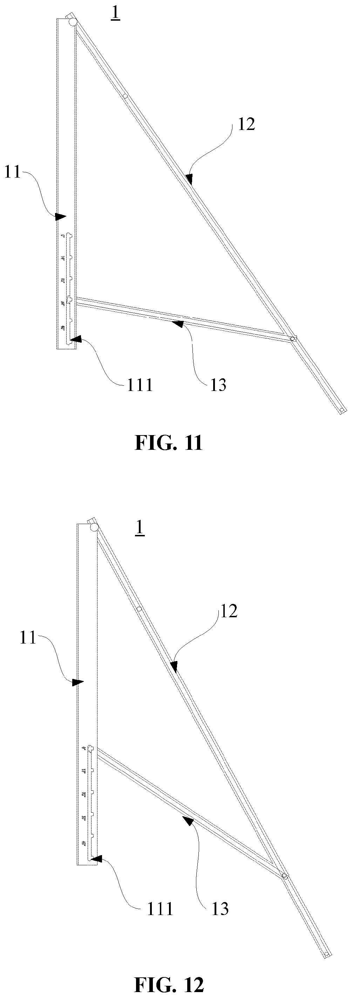

In the present embodiment of the present application, each of the fixation positions is provided with a fifth fixing hole 111. As shown in FIG. 9, FIG. 11 and FIG. 12, by fixing the connecting beam 13 at different fifth fixing holes 111, the inclination angle of the oblique mounting beam 12 can be adjusted.

The vertical support beam 11 is further provided with a communication hole 112, and the communication hole 112 is in communication with any two fifth fixing holes 111 along the vertical direction. In this way, the threaded fastener can move to the expected fixing hole 111 of the multiple fifth fixing holes 111 along the communication hole 112, which makes it easier for the threaded fastener to move along the vertical direction, thereby facilitating the adjustment of the position of the threaded fastener in the vertical direction.

In the present embodiment, the vertical support beam 111 is provided with a mounting groove, one end of the connecting beam 13 is located in the mounting groove, and a length direction of the mounting groove is parallel to the vertical direction. In this way, the one end of the connecting beam 13 is movable along the mounting groove, and therefore the position of the end of the connecting beam 13 in the vertical direction is adjustable (that is, the position of the connecting beam 13 connected to the vertical support beam 111 is adjustable, thereby facilitating the movement and adjustment of the connecting beam 13.

Both the fifth fixing hole 111 and the communication hole 112 are in communication with the mounting groove to ensure the fixed connection between the connecting beam 13 and the vertical support beam 11.

As shown in FIG. 9 and FIG. 10, to easily obtain the inclination angle of the oblique mounting beam 12, at least one of the multiple fixation positions is provided with an angle mark 113, and the angle mark 113 is configured to indicate the inclination angle of the oblique mounting beam 12 or a variation of the inclination angle of the oblique mounting beam 12 when the connecting beam 13 is fixed to the fixation position where the angle mark 113 is located.

It should be noted that, the inclination angle of the oblique mounting beam 12 refers to an inclination angle of the oblique mounting beam 12 with respect to the vertical support beam 11, i.e. the included angle between the oblique mounting beam 12 and the vertical support beam 11.

One of the multiple fixation positions is taken as an initial fixation position, and the angle mark 113 of the initial fixation position is 0°. The inclination angle of the oblique mounting beam 12 at the initial fixation position is the initial inclination angle. The angle mark 113 at any one of other fixation positions indicates a difference between the inclination angle at the fixation position and the initial inclination angle of the oblique mounting beam 12. In this case, the angle mark 113 is configured to indicate the variation of the inclination angle of the oblique mounting beam 12 when the connecting beam 13 is fixed to the fixation position where the angle mark 113 is located. The variation of the inclination angle refers to a variation of the inclination angle with respect to the initial inclination angle.

In practice, each fixation position is provided with the corresponding angle mark 113, such that the individual customer can visually obtain the inclination angle of the oblique mounting beam 12.

In other embodiments, the position of the connecting beam 13 connected to the oblique mounting beam 12 is adjustable, to make the angle between the oblique mounting beam 12 and the vertical support beam 11 adjustable. It should be noted that, the description that the position of the connecting beam 13 connected to the oblique mounting beam 12 is adjustable refers to that the position where the connecting beam 13 is connected to the oblique mounting beam 12 is adjustable along a length direction of the oblique mounting beam 12.

Exemplarily, the oblique mounting beam 12 is provided with at least two fixation positions, and any two of the at least two fixation positions are different in height. The connecting beam 13 is fixed to the fixation position on the oblique mounting beam 12 in a detachable manner. The connecting beam 13 can be fixed to any one of the different fixation positions along the length direction of the oblique mounting beam 12, and in this way the position of the connecting beam 13 connected to the oblique mounting beam 12 can be adjusted.

The specific structure of the fixation positions on the oblique mounting beam 12 may be determined according to practice. For example, reference may be made to the fixation structure of the connecting beam 13 and the vertical support beam 11. For the specific structure provided on the oblique mounting beam 12, reference may be made to the structure provided on the vertical support beam 11, which is not described in detail herein.

In other embodiments, the position where the connecting beam 13 is connected to the vertical support beam 11 is adjustable, and the position where the connecting beam 13 is connected to the oblique mounting beam 12 is also adjustable, to make the angle between the oblique mounting beam 12 and the vertical support beam 11 adjustable. Reference of the specific connection structure may be made to the descriptions hereinabove, which is not described in detail herein.

In some embodiments, one or at least two vertical support beams 11 may be provided. As shown in FIG. 3 and FIG. 13, to improve the stability of the photovoltaic bracket 100, at least two vertical support beams 11 are provided. At least two oblique mounting beams 12 are in one-to-one correspondence to the at least two vertical support beams 11, and at least two bracket clamping portions 2 are in one-to-one correspondence to the at least two vertical support beams 11. It should be noted that, any two of the vertical support beams 11 are arranged in sequence along a length direction of the mounting body 310 on which the photovoltaic bracket 100 is located.

To improve the stability of the photovoltaic bracket 100, the bracket mounting portion 1 further includes a first horizontal support beam 14, and the at least two vertical support beams 11 are perpendicular to the first horizontal support beam 14 or inclined with respect to the first horizontal support beam 14. To improve the stability, the at least two vertical support beams 11 are perpendicular to the first horizontal support beam 14.

Each of the at least two vertical support beams 11 is fixed on the first horizontal support beam 14, and in this case, one first horizontal support beam 14 may be provided. Alternatively, the first horizontal support beam 14 is fixedly connected to two adjacent vertical support beams 11, and in this case, at least one first horizontal support beam 14 is provided.

The first horizontal support beams 14 may be one or at least two. In a case that at least two first horizontal support beams 14 are provided, any two of the at least two first horizontal support beams 14 are arranged in sequence along the vertical direction.

As shown in FIG. 13, to improve the stability of the photovoltaic bracket 100, the bracket mounting portion 1 further includes a second horizontal support beam 15, and the second horizontal support beam 15 is perpendicular to the at least two oblique mounting beams 12 or inclined with respect to the at least two oblique mounting beams 12. To improve the stability, the second horizontal support beam 15 is perpendicular to the at least two oblique mounting beams 12.

Each of the at least two oblique mounting beams 12 is fixed on the second horizontal support beam 15, and in this case, one second horizontal support beam 15 may be provided. Alternatively, the second horizontal support beam 15 is fixedly connected to two adjacent oblique mounting beams 12, and in this case, at least one second horizontal support beam 15 is provided.

The second horizontal support beams 15 may be one or at least two. In a case that at least two second horizontal support beams 15 are provided, any two of the at least two second horizontal support beams 15 are arranged in sequence along the length direction of the oblique mounting beam 12.

As shown in FIG. 13, to facilitate the mounting of the photovoltaic module 200, the oblique mounting beam 12 is provided with a pressing block 16, and the pressing block 16 is configured to be fixedly connected to a rack of the photovoltaic module 200.

To improve the stability of the photovoltaic module 200, a bottom end of the oblique mounting beam 12 is provided with a limiting member 17, and the limiting member 17 is configured to limit the photovoltaic module 200 to prevent the photovoltaic module 200 from falling off from the bottom end of the oblique mounting beam 12.

The limiting member 17 may be a limiting plate, a limiting rod or the like, which is not limited in the present embodiment.

In practice, the bracket mounting portion 1 may be provided with other structures to satisfy actual needs, which is not limited in the present embodiment.

The technical features described hereinabove and the technical features separately illustrated in the drawings can be combined with each other arbitrarily, as long as the combined technical features do not contradict each other. All feasible combinations of the technical features belong to the technical contents clearly described herein. Any of the multiple sub-features included in the same sentence can be applied independently, and does not have to be applied together with other sub-features.

## Claims

1. A photovoltaic bracket (100), comprising a bracket mounting portion (1) and a bracket clamping portion (2), wherein
the bracket mounting portion (1) is configured for mounting a photovoltaic module (200), and at least part of the bracket mounting portion is (1) configured to be arranged at a first side of a mounting body (310); and
at least part of the bracket clamping portion (2) is configured to be arranged at a second side of the mounting body (310), and the bracket clamping portion (2) is configured to be fixedly connected to the bracket mounting portion (1) to clamp the mounting body (310).

2. The photovoltaic bracket (100) according to claim 1, wherein
the bracket clamping portion (2) comprises a first securing portion (21), and the first securing portion (21) is configured to be fixedly connected to the bracket mounting portion (1) to clamp the mounting body (310); and wherein
the first securing portion (21) is configured to be arranged at the second side of the mounting body (310); or,
one part of the first securing portion (21) is located at the second side of the mounting body (310), and the other part of the first securing portion (21) is located at a top face of the mounting body (310).

3. The photovoltaic bracket (100) according to claim 2, wherein the bracket clamping portion (2) further comprises a second securing portion (22), the second securing portion (22) is located at the top face of the mounting body (310), and the first securing portion (21) is configured to be fixedly connected to the bracket mounting portion (1) through the second securing portion (22) to clamp the mounting body (310).

4. The photovoltaic bracket (100) according to claim 3, wherein the second securing portion (22) comprises a first horizontal securing beam (221) and a second horizontal securing beam (222), and the first securing portion (21), the first horizontal securing beam (221), the second horizontal securing beam (222), and the bracket mounting portion (1) are fixedly connected in a listed sequence.

5. The photovoltaic bracket (100) according to claim 4, wherein
a position where the first horizontal securing beam (221) is fixedly connected to the second horizontal securing beam (222) is adjustable along a length direction of the second securing portion (22), to make a length of the second securing portion (22) adjustable; and/or
the first horizontal securing beam (221) is in sliding fit with the second horizontal securing beam (222) along the length direction of the second securing portion (22); and/or
the first horizontal securing beam (221) is fixedly connected to the second horizontal securing beam (222) in a detachable manner, and the second horizontal securing beam (222) is fixedly connected to the bracket mounting portion (1) in a detachable manner; wherein
the length direction of the second securing portion (22) is a direction along which the first side and the second side of the mounting body (310) are arranged in sequence.

6. The photovoltaic bracket (100) according to claim 5, wherein the position where the first horizontal securing beam (221) is fixedly connected to the second horizontal securing beam (222) is continuously or discontinuously adjustable along the length direction of the second securing portion (22).

7. The photovoltaic bracket (100) according to claim 4, wherein
the first horizontal securing beam (221) and the second horizontal securing beam (222) are fixedly connected through a plurality of securing members; wherein
at least one of the plurality of securing members is a first securing member (24), and an axial direction of the first securing member (24) is perpendicular to a length direction of the second securing portion (22); and/or
at least one of the plurality of securing members is a second securing member (25), and an axial direction of the second securing member (25) is parallel to the length direction of the second securing portion (22).

8. The photovoltaic bracket (100) according to claim 7, wherein
in a case that at least one of the plurality of securing members is the first securing member (24), and the axial direction of the first securing member (24) is perpendicular to the length direction of the second securing portion (22),
the first horizontal securing beam (221) is provided with a first fixing hole (2211) fitted with the first securing member (24), and the second horizontal securing beam (222) is provided with a second fixing hole (2221) fitted with the first securing member (24); and
the number of the first fixing hole (2211) is two or more, and the two or more first fixing holes (2211) are arranged in sequence along the length direction of the second securing portion (22); or, the number of the second fixing hole (2221) is two or more, and the two or more second fixing holes (2221) are arranged in sequence along the length direction of the second securing portion (22); or, both the number of the first fixing hole (2211) and the number of the second fixing hole (2221) are two or more, the two or more first fixing holes (2211) and the two or more second fixing holes (2221) are arranged in sequence along the length direction of the second securing portion (22) respectively, to make a position where the first horizontal securing beam (221) is fixedly connected to the second horizontal securing beam (222) adjustable along the length direction of the second securing portion (22);
in a case that at least one of the plurality of securing members is the second securing member (25), and the axial direction of the second securing member (25) is parallel to the length direction of the second securing portion (22),
the second securing member (25) comprises a securing screw (251), and the first horizontal securing beam (221) and the second horizontal securing beam (222) are fixedly connected in a detachable manner through the securing screw (251), to make a position where the first horizontal securing beam (221) is fixedly connected to the second horizontal securing beam (222) adjustable along the length direction of the second securing portion (22); and/or
the first horizontal securing beam (221) is provided with a third fixing hole (2212) fitted with the second securing member (25), the second horizontal securing beam (222) is provided with a mounting through hole (2223) and a fourth fixing hole (2222) that are both fitted with the second securing member (25), and the mounting through hole (2223) is located between the third fixing hole (2212) and the fourth fixing hole (2222).

9. The photovoltaic bracket (100) according to claim 8, wherein
the number of the first fixing hole (2211) is two or more, and the two or more first fixing holes (2211) are arranged in sequence along the length direction of the second securing portion (22); and
the number of the second fixing hole (2221) is one, the second fixing hole (2221) is an elongated hole, and a length direction of the elongated hole is along the length direction of the second securing portion (22).

10. The photovoltaic bracket (100) according to claim 2, wherein
the first securing portion (21) is configured to be fixedly connected to the bracket mounting portion (1) through a securing member to clamp the mounting body (310); and/or, a distance between the first securing portion (21) and the bracket mounting portion (1) is adjustable; and/or, the first securing portion (21) is fixedly connected to the bracket mounting portion (1) in a detachable manner; or,
the first securing portion (21) comprises a first vertical securing beam (211), the first vertical securing beam (211) is configured to be arranged at the second side of the mounting body (310), and the first vertical securing beam (211) is configured to be fixedly connected to the bracket mounting portion (1) to clamp the mounting body (310); and/or, the first securing portion (21) abuts against the mounting body (310) through a securing member, or the first securing portion (21) is fixedly connected to the mounting body (310) through the securing member; and/or, a protective pad (27) is provided at a side of the first securing portion (21) close to the mounting body (310), and the protective pad (27) is configured to be in contact with the mounting body (310).

11. The photovoltaic bracket (100) according to any one of claims 2 to 10, wherein the bracket clamping portion (2) further comprises a second vertical securing beam (23), and the first securing portion (21) is configured to be fixedly connected to the bracket mounting portion (1) through the second vertical securing beam (23) to clamp the mounting body (310); or,
the bracket mounting portion (1) comprises a vertical support beam (11) and an oblique mounting beam (12); wherein the vertical support beam (11) is fixedly connected to the bracket clamping portion (2); and the oblique mounting beam (12) is configured for mounting the photovoltaic module (200), both ends of the oblique mounting beam (12) are fixed to the vertical support beam (11), and the oblique mounting beam (12) is inclined with respect to the vertical support beam (11).

12. The photovoltaic bracket (100) according to claim 11, wherein a bottom end of the oblique mounting beam (12) is fixedly connected to the vertical support beam (11) through a connecting beam (13), and a position of the connecting beam (13) connected to the vertical support beam (11) and/or the oblique mounting beam (12) is adjustable, to make an angle between the oblique mounting beam (12) and the vertical support beam (11) adjustable.

13. The photovoltaic bracket (100) according to claim 12, wherein
the vertical support beam (11) and/or the oblique mounting beam (12) is provided with at least two fixation positions, and any two of the at least two fixation positions are different in height; and/or
the connecting beam (13) is fixed to the at least two fixation positions in a detachable manner.

14. The photovoltaic bracket (100) according to claim 13, wherein
the vertical support beam (11) and/or the oblique mounting beam (12) being provided with the at least two fixation positions is provided with a mounting groove, and the connecting beam (13) is located in the mounting groove; and/or
the at least two fixation positions is each provided with a fifth fixing hole (111), the vertical support beam (11) is provided with a communication hole (112), and the communication hole (112) is in communication with the corresponding fifth fixing holes (111) of any two of the at least two fixation positions; and/or
at least one of the at least two fixation positions is provided with an angle mark (113), the angle mark (113) is configured to indicate an inclination angle of the oblique mounting beam (12) or a variation of the inclination angle of the oblique mounting beam (12) when the connecting beam (13) is fixed to the at least one of the at least two fixation positions where the angle mark (113) is provided.

15. The photovoltaic bracket (100) according to claim 11, wherein
both the number of the vertical support beam (11) and the number of the oblique mounting beam (12) are at least two, and the at least two oblique mounting beams (12) are in one-to-one correspondence to the at least two vertical support beams (11); wherein
the bracket mounting portion (1) comprises a first horizontal support beam (14), the first horizontal support beam (14) is perpendicular to or inclined with respect to the at least two vertical support beams (11), and each of the at least two vertical support beams (11) is fixed to the first horizontal support beam (14), or two adjacent vertical support beams (11) of the at least two vertical support beams (11) are fixedly connected through the first horizontal support beam (14); and/or
the bracket mounting portion (1) comprises a second horizontal support beam (15), the second horizontal support beam (15) is perpendicular to or inclined with respect to the at least two oblique mounting beams (12), and each of the at least two oblique mounting beams (12) is fixed to the second horizontal support beam (15), or two adjacent oblique mounting beams (12) of the at least two oblique mounting beams (12) are fixedly connected through the second horizontal support beam (15).
